# EUROPEAN PATENT APPLICATION

(11) **EP 3 179 827 A1**
(43) Date of publication of application: **14.06.2017**
(21) Application number: 15829474.4
(22) Date of filing: 17.07.2015
(51) Int. Cl.: H05B 3/36, B82Y 30/00

(54) **FLEXIBLE RESISTIVE HEATING ELEMENT**

(30) Priority: 07.08.2014 RU 2014132661
(71) Applicant: Obshhestvo S Ogranichennoj Otvetstvennost'ju "Inzhiniriingovaja Kompanija "Teplofon", Krasnojarsk 660079 (RU)
(72) Inventor: SHANGIN, Andrei Petrovich, Krasnoyarsky krai g. Krasnoyarsk 660100 (RU); ZVONIK, Viktor Vasilievich, Krasnoyarsky krai g. Krasnoyarsk 660049 (RU); ZADOV, Vladimir Efimovich, Krasnoyarsky krai g. Krasnoyarsk 660121 (RU)
(74) Representative: Chimini, Francesco
(86) International application number: PCT/RU2015/000462
(87) International publication number: WO 2016/022044

(57) **Abstract**

The technical solution relates to the field of electrical heating, in particular to flexible heating elements. The flexible resistive heating element comprises a heat-resistant fabric base and a conductive resistive layer formed by resistive carbon composite material applied to the basis of heat-resistant fabric in the form of a colloidal suspension. The resistive carbon composite material comprises carbon black with highly developed specific surface area of at least 300÷600 m²/g, particle size of 10 to 50 nm in combination with colloidal graphite preparations with a graphite particle size less than 4 microns and the heat-resistant polymer binder solution. Polyethylene terephthalate or lavsan is used as a heat-resistant fabric base. The resistive carbon composite material comprises carbon black OMCARB™ CH210, and/or CH220, and/or CH230 and OMCARB™ CH600, along with colloidal graphite preparations or C-0 or C-l, or natural graphitesmilled to particle size of less than 4 microns. A heat-resistant polyester based on terephthalic acid or adipic acid or sebacic acid, or ethylene glycol or diethylene glycol, or parts of the components mentioned, such as TF-60 resin is used as binder. Chloroform or methylene chloride, or dichloroethane, or other substances that can effectively dissolve polymeric binders are used as solvents. The use of the technical solution will allow enhancing the performance of the flexible resistive heating element: reliability, efficiency, adaptability to manufacturing of both the resistive element and the flexible electric heaters made of it.

## Description

### TECHNICAL FIELD

The technical solution relates to the field of electrical heating and can be used to create a flexible heating element on the basis thereof enablingproducing of heating elements for local heating in industrial and household conditions.

### RELATED ART

Materials consisting of highly conductive carbon blacks and polymericbinder solutions are known which are widely used for manufacture of film heaters with low heating temperature (underfloor heating, etc.).

A method for manufacturing a polymeric, e.g., fiberglass electric heater (Patent RU 2074519, IPC H05B 3/14, H05B 3/28, of 27.02.1997) is known, in particular, obtaining a composition of the resistive material as part of a heater with a surface resistance of 30-160 ohms per square. Elemental carbon, graphite and modified phenol-formaldehyde resin are applied to an electrically insulating substrate by impregnating the conductive layer with a seal to form a resistive element. Then the layers impregnated with epoxyor epoxyphenol or phenol-formaldehyde binder are applied to it to form an electrically insulating coating. Then all the layers are pressed under appropriate conditions of temperature, time and pressure. Before applying electrically insulating coating the resistive element is being stacked with the same resistive elements and heat treated (cured) at a temperature of 130-140°C for 10-12 minutes per mm of stack thickness. After the heat treatment, each resistive element is removed from the stack and covered with insulating coating layers containing a binder in the layers adjacent to resistive element 1,2-1,27 times less thanin the external layers and equal to 40-47 wt%.

The disadvantage of the method is the need to impregnate fiberglass from 1 to 3 times and stacking, i.e. the use of multiple conductive layers of glass fabric to achieve the desired low resistivity of the material.

A film resistive material with a resistivity of 5÷5000 Ohm/cm² is known developed by "Impulse" company (Internet: http://www.flexyheat.ru/opisanie-tekhnologii-fleksikhit/). The conductive film is used to create infrared heaters, heating panels, for radioprotection purposes as a radar absorbing material. The film is made as a roll with width up to 62 cm. On the basis of this resistance material heaters with uniform thermal field with specific heat capacity optimal for the heated surface are being produced. The surface temperature of the heating film is up to a hundred degrees. Specifications:
- One-side or two-side application of a conductive composition;
- Resistance of 5 ohms to 5 Mohm;
- Heater thickness of not more than 0.5 mm;
- Substrate thickness 90 microns;
- Thickness with the resistive layer - 140 microns;
- The material is flexible, twisted into rolls;
- Non-flammable.

One of the disadvantages of this technical solution is lack of conductivity of the resistive layer; the power density is insufficient for the commonly used heaters with minimum power at 200-300 watts and dimensions 400*400 mm or 400*700 mm.

The closest to the claimed technical solution is an electric heater (RF patent Nº130374, IPC F24C 7/00, of 20.07.2013), containing a flexible non-metallic thin-film heating element connected to power supply. The flexible non-metallic heating element is a conductive carbon-based layer composition securely sealed between two layers of polyethyleneterephthalatefilm. When connected to the electrical network,the flexible non-metallic heating element is heated to 70°C.

One of the disadvantages of this type of heaters is the fact that heating elements have a limited range of electrical resistivity. Declared maximum operating temperature of 70 °C is insufficient for infrared heaters, both household and industrial, due to insufficiently high specific conductivity of the resistive material used in the heaters as well as low thermal stability of some materials of construction, such as adhesives.

### DISCLOSURE OF THE INVENTION

Technical solution to the problem lies in manufacture of a highly reliable flexible heating element with different sizes and characteristics, which does not require the production of complex, non-standard equipment. The technical result achieved when implementing the claimed technical solution is to improve the performance of this flexible resistive heating element, its reliability and efficiency, increasing processability while manufacturing of both the resistive element and the flexible electric heaters made on its basis.

It can be achieved by specific features of the process: flexible heating resistive element contains a fabric base and a heat resistant conductive resistive layer of carbon-based polymer composition; the conductive resistive layer is formed on the basis of the resistive carbon composite material applied in the form of a colloidal suspension to the heat-resistant fabric base, wherein the resistive carbon composite material comprises carbon black with highly developed specific surface area of at least 300÷600 m²/g, particle size of 10 to 50 nm in combination with colloidal graphite agents with graphite particle size of less than 4 microns, and the heat-resistant polymer binder solution. In addition to that, polyethylene terephthalate, or lavsan is used in the flexible resistive heating element as a heat-resistant fabric base. Additionally, the resistive carbon composite material contains carbon black of grades OMCARB™ CH210 and/or CH220, and/or CH230 and OMCARB™ CH600 and colloidal graphite preparations or C-0 or C-1, or natural graphite milled to particle size of less than 4 micron. In addition, resistive carbon composite material contains binder in the form of a heat-resistant polymer based on polyester or terephthalic acid, or sebacic acid, or adipic acid, or ethylene glycol, or diethylene glycol, or parts of components mentioned such as TF-60 resin. Additionally, the resistive carbon composite material contains chloroform, or methylene chloride, or dichloroethane, or other substances effectively dissolving the polymer binder.

### BRIEF DESCRIPTION OF THE DRAWINGS

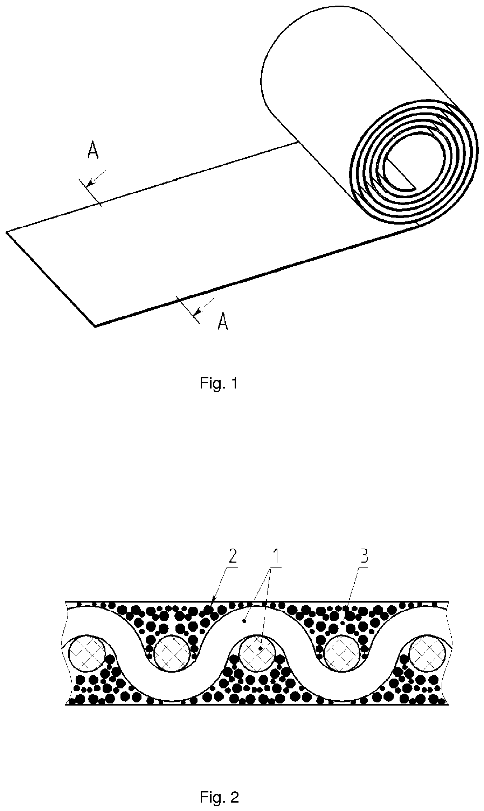

FIG. 1 - a flexible resistive heating element, general view;
FIG. 2 - a flexible resistive heating element, A-Asectional view.

### IMPLEMENTATION OF THE INVENTION

Positions 1 and 2 denote: heat resistant fabric base (1); conductive resistive layer soot-graphite of polymer composite material (2); binder base (3).

The devicecontains a heat-resistant fabric base (1) and the conductive resistive layer (2) based on a carbon-based polymer composition. The conductive resistive layer (2) is formed by a resistive carbon composite material applied in the form of a colloidal suspension to the heat-resistant fabric base (1); wherein the resistive carbon composite material (2) contains a carbon black with a highly specific surface area of 300÷600 m²/g or higher, with particle size of 10 to 50 nm in combination with colloidal graphite preparations with graphite particle size less than 4 microns, and the heat-resistant polymer binder solution (the positions are not shown in the pictures).

In addition to that, polyethylene terephthalate, or lavsanis used in the flexible resistive heating element as a heat-resistant fabric base. Additionally, the resistive carbon composite material contains carbon black of grades OMCARB™ CH210 and/or CH220, and/or CH230 and OMCARB™ CH600 and colloidal graphite preparations or C-0 or C-1, or natural graphite ground to particle size of less than 4 micron. In addition, resistive carbon composite material contains binder in the form of a heat-resistant polymer based on polyester or terephthalic acid, or sebacic acid, or adipic acid, or ethylene glycol, or diethylene glycol, or parts of components mentioned such as TF-60 resin. Additionally, the resistive carbon composite material contains chloroform, or methylene chloride, or dichloroethane, or other substances effectively dissolving the polymer binder.

The device operates as follows:
When connecting the device to a power source, electric current flows through the current leads (not shown) through a resistive composite layer of the heating element and evenly heats the entire surface of the flexible heating element.

An example of embodiment of a flexible resistive heating element.

The conductive resistive soot-graphite layer (2) of polymer composite material is formed by applying a finely divided soot-graphite suspension in polymer solution to a heat resistant fabric base (1). As a highly conductive and highly dispersed nanomaterial- soot - carbon black of grades OMCARB™ CH210 and OMCARB™ CH600 is used. The colloidal graphite preparation C-1 (C-0) is used as a component having a very high electrical conductivityclose to one of a metal, within the flake particles composed of a large number of graphene layers.

Binding - polyester resin TF-60 - is a chemical analogue of polyethyleneterephthalate (lavsan). Lavsan has a high temperature resistance (softens at 245-248 and melts at 255-265°C, weather resistance and dielectric strength. Resin TF-60 is one of the few adhesives that can effectively connect smooth and defect-free polyethyleneterephthalatefilm and polyethyleneterephthalatefibers. Resin melting temperature is 145-160°C. The resin TF-60 can be dissolved by methylene chloride, chloroform ordichloroethane. It is possible to use volatile solvents of other classes.

Features of use of the technical solution.
1. Flexible resistiveheating element with the heating resistive layer distributed all over the heat-radiating surface has optimum thermophysical efficiency, i.e.there is no local overheating.
2. The capacity for little deformation without any deterioration of mechanical and conductive properties allows efficient heat transfer from the heater to the face decorative layer, since the element can be adhered to almost any facial layer without gaps with the adhesive layer thickness of about 1-5 microns, which does not impair heat transfer.
3. Flexible resistive heating element can be used to heat any objects having the heating temperature from 30 to 130-150°C, with virtually any geometrically complex surface configuration, i.e. it has as nearly as possible universal application.
4. The components, which make up the heating element, can be produced on an industrial scale; they are quite available and relatively cheap. Material consumption per 1 m2 of the heater is low due to small element thickness which is about 0.2 mm. This allows large scale and cost-effective manufacturing.
5. Manufacturing technology also allows launching production on a large scale at relatively low costsof design, construction and startingof the equipment.
6. The reliability and durability of the resistive layer is determined by a core of reinforcing polyethyleneterephthalate (lavsan) or other heat resistant fabric. The fabric base determines maximum thickness and electrical resistance of carbon-polymer layer and reinforces high strength properties of the flexible heating element. Reliability increasesas the distribution of mechanical defects is limited by the fibers of reinforcing fabric.

## Claims

1. Flexible heating resistive element, comprising a heat-resistant fabric base and a conductive resistive layer based on a resistive carbon composite material, wherein the resistive conductive layer is formed on the basis of the resistive carbon composite material in the form of colloidal suspension, coated on the heat resistant fabric base, the resistive carbon composite material comprising carbon black with highly developed specific surface area of at least 300÷600 m²/g, particle size of 10 to 50 nm in combination with colloidal graphite preparations with graphite particle size less than 4 microns in solution of a heat resistant polymer binder.

2. Flexible resistive heating element according to claim 1, wherein said heat-resistant fabric base comprises polyethylene terephthalate or lavsan.

3. Flexible resistive heating element according to claim 1, wherein said carbon black of grades OMCARB™ CH210 and/or CH220 and/or CH230 and OMCARB™CH600 and colloidal graphite preparations or C-0 or C 1 or natural graphites milled to particle size of less than 4 microns are used in the resistive carbon composite material.

4. Flexible resistive heating element according to claim, 1 wherein said heat-resistant polymer based on polyester or terephthalic acid, or sebacic acid, or adipic acid, or ethylene glycol, or diethylene glycol or parts thereof, such as TF-60 resin, are used as binding in the resistive carbon composite material.

5. Flexible resistive heating element according to claim 1, wherein chloroform or methylene chloride, or dichloroethane, or other substances that can effectively dissolve polymeric binders are used as solvents in resistive carbon composite material.
